# EUROPÄISCHE PATENTSCHRIFT

(11) **EP 2 482 019 B1**
(45) Veröffentlichungstag und Bekanntmachung des Hinweises auf die Patenterteilung: **01.10.2014**
(21) Anmeldenummer: 11152707.3
(22) Anmeldetag: 31.01.2011
(51) Int. Cl.: F27B 3/22, F27D 3/16, C21C 5/46, C21C 7/072

(54) **Brennlanzenhalter zum Haltern einer Brennlanze durch eine Handhabungseinrichtung**
Burning lance holder for holding a burning lance by means of a handling device
Support de lance de combustion pour soutenir une lance de combustion à l'aide d'un dispositif de manipulation

(43) Veröffentlichungstag der Anmeldung: 01.08.2012
(73) Patentinhaber: Siemens VAI Metals Technologies GmbH, 4031 Linz (AT)
(72) Erfinder: Ebner, Helmut, 4331, Naarn (AT); Priesner, Andreas, 4030, Linz (AT); Scheidegger, Roger, 4300, St. Valentin (AT); Thoene, Heinrich, 4020, Linz (AT); Hirschmanner, Martin, 4060, Leonding (AT)
(74) Vertreter: Maier, Daniel Oliver

(56) Entgegenhaltungen:
- EP-A1- 0 372 098
- WO-A1-2009/141184
- DE-A1- 1 408 879
- DE-A1- 2 738 291
- DE-A1- 4 034 809
- DE-C1- 19 547 885
- DE-T2- 69 112 143
- JP-A- 10 237 530

## Beschreibung

Die vorliegende Erfindung betrifft einen Brennlanzenhalter zum Haltern einer Brennlanze durch eine Handhabungseinrichtung, beispielsweise einen Industrieroboter.

Das Freilegen von Ausfluss bzw. Ausgussöffnungen von metallurgischen Gefäßen, z.B. Konvertern, Pfannen oder Gießverteilern, stellt eine der gefährlichsten Tätigkeiten in einem Hüttenwerk dar. Notwendig wird diese Tätigkeit dann, wenn eine Öffnung des Gefäßes, bspw. ein Ausflusskanal, von erstarrtem bzw. zugefrorenem Metall, Sand oder Ähnlichem verlegt ist, sodass beim Öffnen des eigentlichen Verschlussorgans - bspw. eines Schiebers oder eines Stopfens, der Ausfluss nicht zustande kommt.

Zum Öffnen einer Ausflussöffnung sind bereits folgende Verfahren bekannt:
- Händisches Aufbrennen,
- Automatisches Öffnen der Ausflussöffnung durch einen Bolzen in Verbindung mit einem Federvorspannsystem;
- Elektrisches Aufschweißen; und
- Händisches Öffnen mittels eines sogenannte Schieber-Öffnungs-Systems (kurz SOS) der Fa. Reinguss GmbH.

Am gängigsten ist nach wie vor das händische Aufbrennen einer Ausflussöffnung, wobei die Öffnung mittels einer Sauerstoff-Brennlanze, bestehend aus einem dünnen, meist abgewinkelten Brennlanzenrohr, geöffnet wird. Zuerst wird die Brennlanze händisch in einen Handhalter mit einem Sauerstoffabschlussventil eingespannt; dann öffnet der Bediener über das Ventil die Sauerstoffzufuhr zur Brennlanze und hält die Spitze der Brennlanze in eine Flamme oder an eine heiße Stelle, wodurch das Brennlanzenrohr zu brennen beginnt. Die Brennlanze wird anschließend händisch von unten in die Ausflussöffnung eingeführt und bis zum Anschlag an die Verschlussstelle des metallurgischen Gefäßes nach oben gedrückt. Der Sauerstoff verbrennt das Lanzenrohr und liefert die nötige Wärme, um die den Ausflusskanal blockierenden Materialien aufzuschmelzen bzw. zu verbrennen. Dabei verbraucht sich das Lanzenrohr und muss vom Bediener nachgeschoben werden, bis der Kanal frei ist und der Ausfluss aus dem Gefäß zustande kommt. Meist werden dabei mehrere Brennlanzen verbraucht bis die Öffnung erfolgt. Nachteilig daran ist:
- Große Gefahr für den Bediener, der nahezu direkt unter dem offenen Schieber oder Stopfen und dem sich öffnenden Kanal die Aufbrenntätigkeit durchführen muss.
- Geringe Brennleistung, da die Brennlanze nicht schwer und mit großer Brennleistung ausgeführt werden kann, da der Bediener diese nicht handhaben könnte.
- Großer Zeitbedarf, da meist mehrere Brennlanzen hintereinander nötig sind, um eine Ausflussöffnung aufzuschmelzen; dadurch wird ebenfalls der Betriebsablauf beim Stranggießen gestört.

Nachteilig am automatischen Öffnen einer Ausflussöffnung durch einen Bolzen und ein Federvorspannsystem (z.B. das System "Flowing slat" der Fa. Bernhard Jacob GmbH) ist, dass der Bolzen manchmal in der Öffnung hängen bleibt, ohne den Kanal zu öffnen. Dabei wird der Schieber in offener Stellung blockiert, wodurch das metallurgische Gefäß in diesem Zustand weder vollständig geöffnet noch sicher geschlossen ist; kritisch ist auch, dass das Gefäß in diesem Zustand durch die Halle abtransportiert werden muss.

Am elektrischen Aufschweißen ist nachteilig, dass ein Schweißdraht in den Ausflusskanal von unten zugeführt und abgebrannt werden muss, dass dieses Verfahren eine geringe Wärmeleistung und wegen der Keramikbauteile im Kanal nicht gesicherte Kontaktbedingungen aufweist, und dass die Stromzuführung zum Schweißdraht aufwändig ist.

Obwohl offenbar das Schieber-Öffnungs-System der Fa. Reinguss eine Verbesserung gegenüber dem händischen Aufbrennen darstellt, ist daran nachteilig, dass nach wie vor ein Mitarbeiter in unmittelbarer Nähe der Ausflussöffnung mit einer Brennlanze hantieren muss.

Grundsätzlich nachteilig am manuellen Öffnen einer Ausflussöffnung mittels einer Brennlanze ist, dass entweder die Brennleistung und das Gewicht der Lanze gering sind, oder aber die Brennleistung und das Gewicht hoch sind. Im ersten Fall dauert das Aufbrennen lange, im zweiten Fall ist es für den aufbrennenden Bediener sehr anstrengend, die Lanze zu halten.

Aber auch das Aufbrennen einer Ausflussöffnung mittels eines Industrieroboters ist bereits bekannt, bspw. aus der US 2010/0017027 A1DE 40 34 809 A, der US 2008/0314938 A1 oder der WO 2010/049161 A1. Wie allerdings ein Brennlanzenhalter für einen Industrieroboter konkret auszuführen ist, lässt sich aus diesen Schriften nicht ermitteln.

Die Aufgabe der Erfindung ist es, die Nachteile des Stands der Technik zu überwinden und einen Brennlanzenhalter für einen Industrieroboter darzustellen, der eine kompakte Bauform aufweist, robust ist und das sichere Haltern von Brennlanzen mit hoher Brennleistung erlaubt.

Diese Aufgabe wird durch einen Brennlanzenhalter gemäß Ansprüche 1-12 der eingangs genannten Art gelöst, der aufweist:
- eine Kuppeleinrichtung zum automatischen Ankuppeln des Brennlanzenhalters an eine Handhabungseinrichtung;
- eine Spanneinrichtung zum automatischen Verbinden des Brennlanzenhalters mit der Brennlanze, wobei die Spanneinrichtung von einem Aktuator in eine Spannposition zum Spannen der Brennlanze und in eine Freigabeposition zum Freigeben der Brennlanze verlagerbar ausgebildet ist; und
- wenigstens eine Sauerstoffeinführung zum Einführen von Sauerstoff in die Brennlanze.

Durch die Kuppeleinrichtung wird das automatische Ankuppeln des Brennlanzenhalters an die Handhabungseinrichtung ermöglicht; die Spanneinrichtungen stellt sicher, dass die Brennlanze zuverlässig mit dem Brennlanzenhalter verbunden werden kann, wobei ein im Brennlanzenhalter integrierter Aktuator zur Betätigung der Spanneinrichtungen ausgebildet ist. Die Spanneinrichtung stellt in der Spannposition sicher, dass die Brennlanze fest mit dem Brennlanzenhalter verbunden ist; im Gegensatz dazu, lässt die Spanneinrichtung in der Freigabeposition das Einführen der Brennlanze in die Spanneinrichtung zu. Die Sauerstoffeinführung, vorzugsweise als eine Sauerstoff-Durchführung ausgebildet, stellt sicher, dass eine ausreichende Menge an Sauerstoff für das Aufbrennen einer Ausflussöffnung in die Brennlanze eingeführt werden kann. Dabei ist es vorteilhaft, den Sauerstoff über die Kuppeleinrichtung in den Brennlanzenhalter und vom Brennlanzenhalter durch die Sauerstoffeinführung in die Brennlanze zu führen.

Es ist unbedingt, die Kuppeleinrichtung als einen Spannkegel mit einer Verriegelungseinrichtung (z.B. als einen Ringbund des Spannkegels) auszubilden.

Eine zweckmäßige Kuppeleinrichtung umfasst mehrere Durchführungen, wie für die Fluide Druckluft oder Hydraulik und für zumindest eine elektrische Leitung.

Als besonders vorteilhaft hat es sich herausgestellt, dass zumindest zwei, vorzugsweise alle, Durchführungen denselben Abstand zur Symmetrieachse der Kuppeleinrichtung aufweisen. Dadurch können die Durchführungen sehr kompakt im Bereich des Umfangs des Spannkegels angeordnet werden

Eine einfache und robuste Spanneinrichtung laut Anspruch 1 weist einen Spannkopf mit einer Drehachse und zumindest einen Kniehebel auf, wobei der Kniehebel über die Drehachse schwenkbar ausgebildet ist. Die Kniehebel-Mechanik stellt auf einfache Art und Weise eine Verstärkung der Spannkraft des Aktuators und dadurch eine sichere Klemmung der Brennlanze im Brennlanzenhalter sicher.

Bei einer einfachen Lösung sind zwei Kniehebeln mittels eines Mitnehmers miteinander verbunden, wobei die Brennlanze mittels des Mitnehmers gegen den Spannkopf verspannbar ist.

Es ist weiters vorteilhaft, den Mitnehmer als eine Hülse mit einer nutförmigen Kerbe auszubilden. Dadurch wird die Brennlanze durch die Spanneinrichtung in der Spannposition im Bereich der Kerbe lokal plastisch verformt, sodass die Brennlanze noch sicherer geklemmt wird.

Für die automatische Aufnahme einer Brennlanze (beispielsweise aus einem Brennlanzen-Magazin) ist es vorteilhaft, dass der Spannkopf einen Einführtrichter zum Zentrieren der Brennlanze aufweist.

Der Brennlanzenhalter lässt sich besonders kompakt und zugleich mit hoher Klemmkraft ausführen, wenn der Aktuator als ein pneumatischer Aktuator, vorzugsweise als ein pneumatischer Muskel, ausgebildet ist.

Nach einer Ausführungsform ist die Kuppeleinrichtung über einen Trägerflansch mit einem Geräterahmen des Brennlanzenhalters verbunden, wobei sich der Geräterahmen über den Trägerflansch an der Kuppeleinrichtung abstützt.

Die Robustheit des Brennlanzenhalters kann einfach erhöht werden, wenn der Geräterahmen von einem Schutzgehäuse zumindest teilweise, vorzugsweise vollständig, umschlossen ist.

Eine einfache und robuste Messung der Anpresskraft der Brennlanze an ein metallurgischen Gefäßes ist gewährleistet, wenn der Trägerflansch eine Messeeinrichtung (beispielsweise eine DMS Vollbrücke) zur Messung der Anpresskraft umfasst. Die Robustheit bei der Übertragung des Messsignals der Anpresskraft an eine Steuer- oder Regeleinrichtung wird erhöht, wenn der Brennlanzenhalter einen integrierten Messverstärker zur Verstärkung eines Signals der Messeinrichtung aufweist. In diesem Fall wird das verstärkte Messsignal vom Messverstärker durch eine Durchführung der Kuppeleinrichtung geführt.

Eine einfache Reduktion der Durchbiegung der Brennlanze beim Anpressen an das metallurgische Gefäß kann erzielt werden, wenn der Brennlanzenhalter ein in Längsrichtung ausgerichtetes Versteifungselement aufweist.

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig 1 eine perspektivische Darstellung eines 6-Achsen Industrieroboters mit einer ersten Ausführungsform eines Brennlanzenhalters, der eine Brennlanze trägt;
Fig 2 eine perspektivische Darstellung einer zweiten Ausführungsform eines Brennlanzenhalters;
Fig 3 und 4 einen Grundriss und einen teilweise geschnittenen Aufriss des Brennlanzenhalters nach Fig 2;
Fig 5 eine Detaildarstellung des Brennlanzenhalters aus Fig 4; und
Fig 6 und 7 eine ungeschnittene und eine teilweise geschnittene perspektivische Darstellung einer Spanneinrichtung.

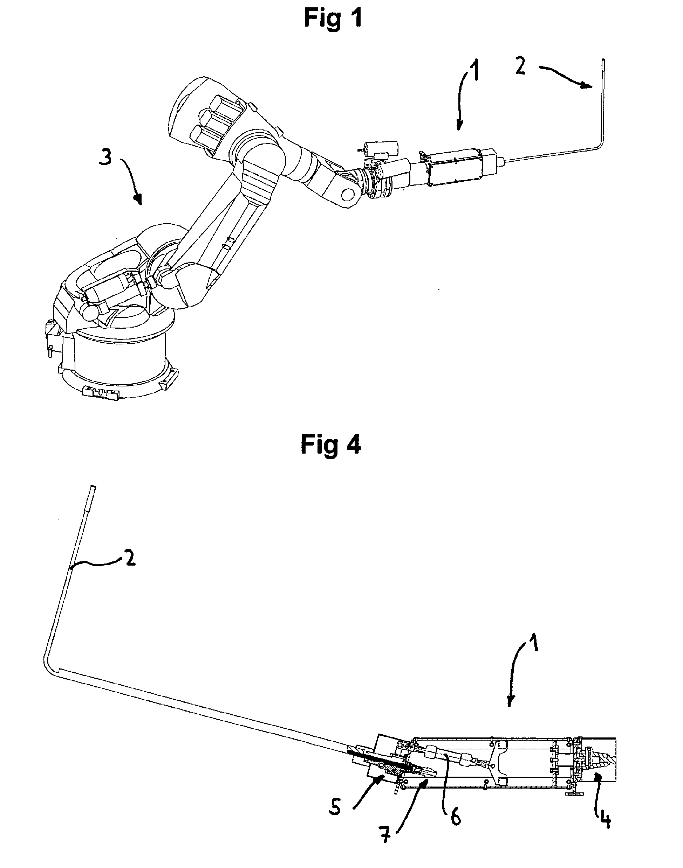

In Figur 1 ist ein Industrieroboter 3 mit einer ersten Ausführungsform eines Brennlanzenhalters 1 mit einer Brennlanze 2 dargestellt. Konkret weist der Brennlanzenhalter 1 zwei Kameras auf, um die Navigation des Industrieroboters 3 beim Aufbrennen einer Ausflussöffnung eines metallurgischen Gefäßes auf der Gießbühne einer Stranggießmaschine zu vereinfachen. Die Brennlanze 2 selbst ist als sogenannte "Kernlanze" (siehe z.B. die Produktinformation PI 09/02D "Kernlanzen zum Thermischen Trennen der Fa. BEDS Oxygentechnik Armaturen GmbH) ausgebildet, wobei an der Spitze der Brennlanze eine Zündkapsel mit einer Treibladung der Firma Ferrox AB angebracht ist. Gemäß einer nicht dargestellten Ausführungsform, ist der Industrieroboter auf einer schwenkbaren Achse angeordnet, sodass der Roboter nach dem Aufbrennen rasch aus dem Gefahrenbereich unterhalb des metallurgischen Gefäßes gebracht werden kann.

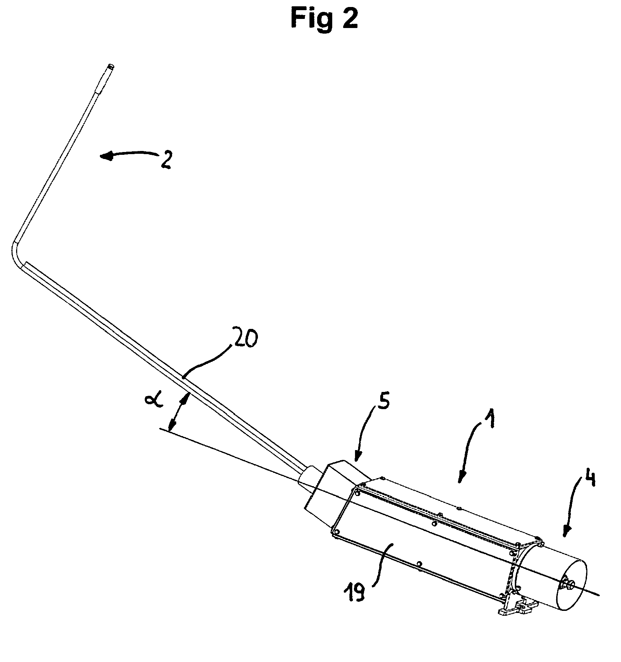

In Figur 2 ist der Brennlanzenhalter 1 selbst mit einer Kuppeleinrichtung 4 und einer Spanneinrichtung 5 näher dargestellt. Die Spanneinrichtung 5 und ein Versteifungselement 20 weisen gegenüber der Längsachse des Brennlanzenhalters 1 einen Winkelversatz α auf, wodurch je nach verwendetem Robotertyp die Brennlanze 2 einfacher in eine Ausflussöffnung eingeführt werden kann. Um den Brennlanzenhalter 1 vor Verunreinigung, Schmelze bzw. anhaftender Schmelze zu schützen, ist der Brennlanzenhalter 1 vollständig von einem Schutzgehäuse 19 umgeben.

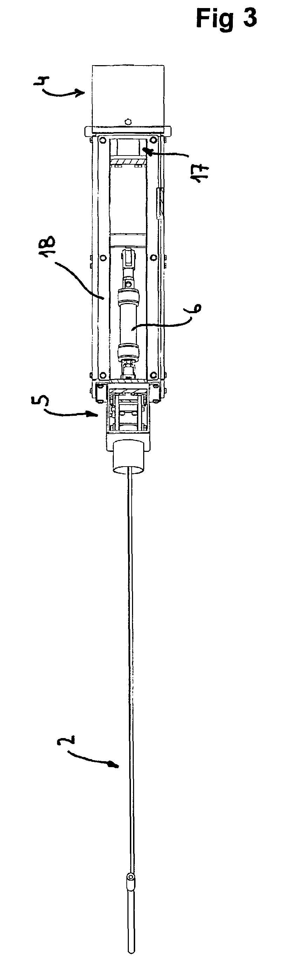

In Figur 3 ist ein Grundriss des Brennlanzenhalters 1 gemäß Fig 2 dargestellt. Konkret ist erkennbar, dass der Brennlanzenhalter 1 einen Geräterahmen 18 aufweist, der über einen Verbindungsflansch 17 mit der Kuppeleinrichtung 4 verbunden ist. Die Spanneinrichtung 5 als auch der pneumatische Aktuator 6 stützen sich am Geräterahmen 18 beziehungsweise einer Querstrebe des Geräterahmens 18 ab. Der Trägerflansch 17 weist eine als DMS-Vollbrücke ausgebildete Messeinrichtung zur Messung einer Anpresskraft der Brennlanze an ein nicht dargestelltes metallurgisches Gefäß auf. Dabei ist die Messeinrichtung in den Geräterahmen 18 integriert, sodass durch den Spannkegel der Kuppeleinrichtung 4 ein bereits verstärktes Messsignal an eine Steuer- oder Regeleinrichtung übertragen werden kann.

In Figur 4 ist eine teilweise geschnittene Darstellung eines Aufrisses des Brennlanzenhalters 1 gemäß den Figuren 2 und 3 dargestellt.

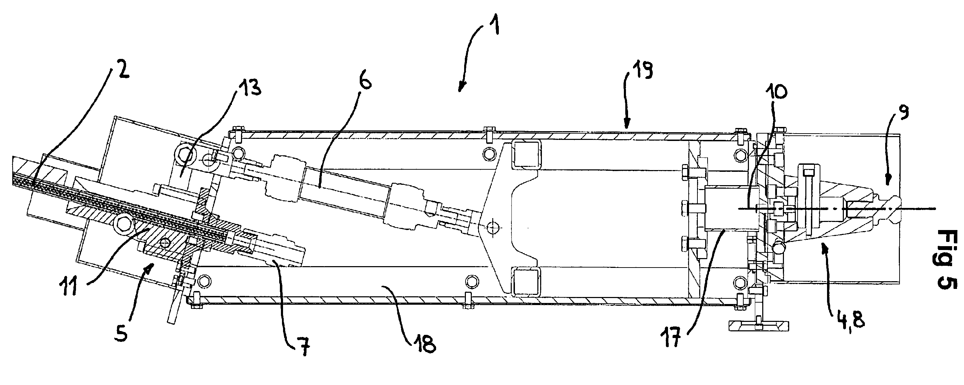

Figur 5 zeigt den Aufriss des Brennlanzenhalters gemäß Fig 4 detaillierter. Der Brennlanzenhalter 1 ist über eine als Spannkegel 8 ausgebildete Kuppeleinrichtung 4 mit einer nicht näher dargestellten Handhabungseinrichtung verbunden. Der Spannkegel stellt sicher, dass der Brennlanzenhalter 1 zentriert, spielfrei und automatisiert (d.h. ohne manuelle Intervention) von einer Handhabungseinrichtung aufgenommen werden kann. Hierzu weist die Handhabungseinrichtung ein Gegenstück zum Spannkegel 8 auf, wobei der Brennlanzenhalter 1 über eine Verriegelungseinrichtung 9, die als ein ringförmiger Ansatz des Spannkegels ausgebildet ist, mit der Handhabungseinrichtung lösbar verbunden werden kann. Die Kuppeleinrichtung 4 weist mehrere Durchführungen für Pneumatik, elektrische Leitungen, elektronische Signale und gegebenenfalls Hydraulik auf, die einen konstanten Abstand zur Symmetrieachse des Spannkegels 8 aufweisen. Die Kuppeleinrichtung 4 ist über einen Trägerflansch 17 mit dem Geräterahmen 18 des Brennlanzenhalters 1 verbunden. Am Geräterahmen 18 selbst stützt sich die Spanneinrichtung 5 und der Aktuator 6 ab, sodass das automatische Einführen einer Brennlanze 2 in den Brennlanzenhalter 1 und das Verspannen bzw. Verklemmen der Brennlanze 2 mit dem Brennlanzenhalter 1 von einem Roboter automatisiert durchgeführt werden kann. Um die Versorgung der Brennlanze 2 mit Sauerstoff sicherzustellen, ist die Kuppeleinrichtung 4 mittels einer nicht dargestellten Luftleitung über eine Sauerstoffeinführung 7 mit der Brennlanze 2 verbunden. Die Spanneinrichtung 5 weist eine Kniehebel-Mechanik 11,12,13 auf, sodass die Kraft des als ein pneumatischer Muskel ausgebildeten Aktuators 6 nochmals verstärkt wird.

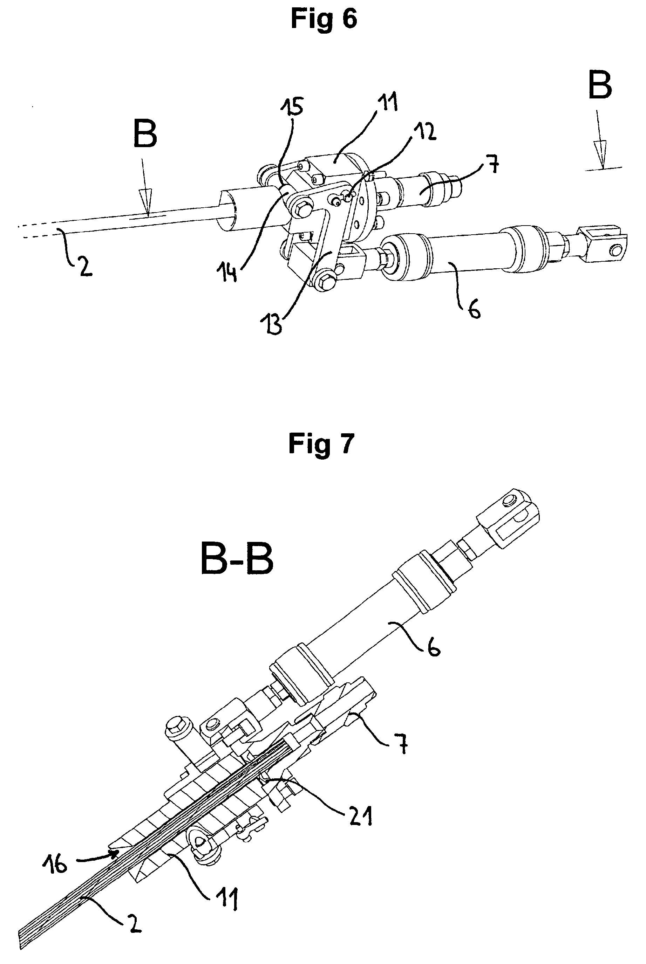

In den Figuren 6 und 7 ist die Spanneinrichtung 5 nochmals detaillierter dargestellt. Die Spanneinrichtung 5 weist einen Spannkopf 11 mit einer Drehachse 12 und zwei Kniehebeln 13 auf, die gegenüber der Drehachse 12 schwenkbaren ausgebildet sind. Die Kniehebeln 13 sind mittels eines Mitnehmers 14, der als Hülse mit einer nutförmigen Kerbe 15 ausgeführt ist, miteinander verbunden. Durch die Kerbe 15 wird die Brennlanze 2 lokal plastisch verformt, sodass die Brennlanze noch sicherer von der Spanneinrichtung 5 des Brennlanzenhalters 1 gehalten wird. Der Spannkopf 11 weist an der - der Brennlanze 2 zugewandten - Seite einen Einführtrichter 16 auf, sodass das automatische Einführen der Brennlanze 2 in den Brennlanzenhalter 1 vereinfacht wird. Die Sauerstoffeinführung 7 stellt eine druckdichte Verbindung einer Sauerstoffleitung mit der Brennlanze 2 sicher, wobei der Spannkopf vorzugsweise ein Dichtelement 21 aufweist, das sowohl axiale als auch radiale Bewegungen der Brennlanze 2 bzgl. des Spannkopfs 11 sicher ausgleichen kann. Als Dichtelement 21 hat sich ein modifizierter Radialwellendichtring mit einer Dichtlippe bewährt.

Beim Aufbrennen einer Ausflussöffnung eines metallurgischen Gefäßes wird wie folgt vorgegangen: Zuerst wird eine Brennlanze 2 aus einem Brennlanzen-Magazin von einem Brennlanzenhalter 1, der an einen Industrieroboter 3 angekoppelt ist, automatisiert aufgenommen. Vorteilhafterweise liegt die Brennlanze 2 im Magazin still und der Brennlanzenhalter 1 wird relativ zur Brennlanze 2 bewegt, sodass die Brennlanze 2 über den Einführtrichter 16 in den Spannkopf 11 eingeführt wird. Anschließend wird die Spanneinrichtung 5 mittels des Aktuators 6 von der Freigabeposition in die Spannposition gebracht, sodass die Brennlanze 2 sicher mit dem Brennlanzenhalter 1 verbunden ist. Anschließend verfährt der Industrieroboter 3 die Brennlanze 2 zum metallurgischen Gefäß und führt sie dort von unten (normalerweise in vertikaler Richtung nach oben) in die Ausflussöffnung des Gefäßes ein. Nachdem ein Kontakt zwischen der Brennlanze 2 und dem metallurgischen Gefäß hergestellt worden ist, wird die Sauerstoffversorgung der Brennlanze 2 freigegeben, wobei eine an der Spitze der Brennlanze 2 angebrachte Zündkapsel durch den Druck des Sauerstoffs automatisch gezündet wird. Durch das Zünden der Brennlanze 2 im Ausgusskanal selbst, wird verhindert, dass der Schieber bzw. der Stopfen verschmutzt beziehungsweise beschädigt wird. Beim Aufbrennen der Ausflussöffnung wird die Brennlanze vertikal nach oben bewegt, wobei sich die Brennlanze 2 beziehungsweise die im Inneren der Brennlanze vorhandenen Stahldrähte verbrauchen. Durch eine Regelung des Anpressdrucks der Brennlanze 2 an das metallurgischen Gefäßes wird sichergestellt, dass zum Einen ständig ein Kontakt zwischen der Brennlanze 2 und dem Gefäß sichergestellt ist und zum Anderen, die Brennlanze 2 nicht durch übermäßigen Druck zu stark verformt wird.

### Bezugszeichenliste

- 1: Brennlanzenhalter
- 2: Brennlanze
- 3: Industrieroboter
- 4: Kuppeleinrichtung
- 5: Spanneinrichtung
- 6: Aktuator
- 7: Sauerstoffeinführung
- 8: Spannkegel
- 9: Verriegelungseinrichtung
- 10: Symmetrieachse Spannkegel
- 11: Spannkopf
- 12: Drehachse
- 13: Kniehebel
- 14: Mitnehmer
- 15: Kerbe
- 16: Einführtrichter
- 17: Trägerflansch
- 18: Geräterahmen
- 19: Schutzgehäuse
- 20: Versteifungselement
- 21: Dichtelement

## Patentansprüche

1. Brennlanzenhalter (1) zum Haltern einer Brennlanze (2) durch eine Handhabungseinrichtung (3), **dadurch gekennzeichnet, dass** der Brennlanzenhalter (1) aufweist
- eine Kuppeleinrichtung (4) zum automatischen Ankuppeln des Brennlanzenhalters (1) an die Handhabungseinrichtung (3), wobei die Kuppeleinrichtung (4) als ein Spannkegel (8) mit einer Verriegelungseinrichtung (9) ausgebildet ist;
- eine Spanneinrichtung (5) mit einem Aktuator (6) zum automatischen Verbinden des Brennlanzenhalters (1) mit der Brennlanze (2), wobei die Spanneinrichtung (5) vom Aktuator (6) in eine Spannposition zum Spannen der Brennlanze (2) und in eine Freigabeposition zum Freigeben der Brennlanze (2) verlagerbar ausgebildet ist und die Spanneinrichtung (5) einen Spannkopf (11) mit einer Drehachse (12) und zumindest einen Kniehebel (13) aufweist, wobei der Kniehebel (13) über die Drehachse (12) schwenkbar ausgebildet ist; und
- wenigstens eine Sauerstoffeinführung (7) zum Einführen von Sauerstoff in die Brennlanze (2).

2. Vorrichtung nach Anspruch 1, **dadurch gekennzeichnet, dass** die Kuppeleinrichtung (4) mehrere Durchführungen, wie für die Fluide Druckluft oder Hydraulik und für zumindest eine elektrische Leitung umfasst.

3. Vorrichtung nach Anspruch 2, **dadurch gekennzeichnet, dass** zumindest zwei Durchführungen denselben Abstand zur Symmetrieachse (10) der Kuppeleinrichtung (4) aufweisen.

4. Vorrichtung nach Anspruch 1, **dadurch gekennzeichnet, dass** zwei Kniehebeln (13) mittels eines Mitnehmers (14) miteinander verbunden sind, wobei die Brennlanze (2) mittels der Mitnehmers (14) gegen den Spannkopf (11) verspannbar ist.

5. Vorrichtung nach Anspruch 4, **dadurch gekennzeichnet, dass** der Mitnehmer (14) als eine Hülse mit einer nutförmigen Kerbe (15) ausgebildet ist.

6. Vorrichtung nach einem der Ansprüche 1, 4 und 5, **dadurch gekennzeichnet, dass** der Spannkopf (11) einen Einführtrichter (16) zum Zentrieren der Brennlanze (2) aufweist.

7. Vorrichtung nach einem der Ansprüche 1 bis 6, **dadurch gekennzeichnet, dass** der Aktuator (6) als pneumatischer Aktuator, vorzugsweise als ein pneumatischer Muskel, ausgebildet ist.

8. Vorrichtung nach einem der Ansprüche 1 bis 7, **dadurch gekennzeichnet, dass** die Kuppeleinrichtung (4) über einen Trägerflansch (17) mit einem Geräterahmen (18) verbunden ist, wobei sich der Geräterahmen über den Trägerflansch (17) an der Kuppeleinrichtung (4) abstützt.

9. Vorrichtung nach Anspruch8, **dadurch gekennzeichnet, dass** der Geräterahmen (18) von einem Schutzgehäuse (19) zumindest teilweise umschlossen ist.

10. Vorrichtung nach Anspruch 8, **dadurch gekennzeichnet, dass** der Trägerflansch (17) eine Messeinrichtung zur Messung der Anpresskraft der Brennlanze (2) an ein metallurgisches Gefäß umfasst.

11. Vorrichtung nach Anspruch 10, **dadurch gekennzeichnet, dass** der Brennlanzenhalter (1) einen Messverstärker zur Verstärkung eines Signals der Messeinrichtung aufweist.

12. Vorrichtung nach einem der Ansprüche 1 bis 11, **dadurch gekennzeichnet, dass** der Brennlanzenhalter (1) ein in Längsrichtung ausgerichtetes Versteifungselement (20) aufweist, sodass die Durchbiegung der Brennlanze (2) beim Anpressen an ein metallurgische Gefäß reduziert wird.

## Claims

1. Fuel lance holder (1) for holding a fuel lance (2) by a handling device (3), **characterised in that** the fuel lance holder (1) has
- a coupling device (4) for automatically coupling the fuel lance holder (1) to the handling device (3), wherein the coupling device (4) is embodied as a clamping cone (8) with a locking device (9);
- a clamping device (5) with an actuator (6) for automatically connecting the fuel lance holder (1) to the fuel lance (2), wherein the clamping device (5) is embodied to be displaceable by an actuator (6) into a clamping position for clamping the fuel lance (2) and into a release position for releasing the fuel lance (2), and the clamping device (5) has a clamping head (11) with an axis of rotation (12) and at least one toggle lever (13), wherein the toggle lever (13) is embodied to be able to pivot about the axis of rotation (12); and
- at least one oxygen-introducing device (7) for introducing oxygen into the fuel lance (2).

2. Apparatus according to claim 1, **characterised in that** the coupling device (4) comprises a plurality of feedthroughs, such as for the fluids compressed air or hydraulics, and for at least one electrical line.

3. Apparatus according to claim 2, **characterised in that** at least two feedthroughs are at the same distance from the axis of symmetry (10) of the coupling device (4).

4. Apparatus according to claim 1, **characterised in that** two toggle levers (13) are connected to one another by means of a driver (14), wherein the fuel lance (2) can be clamped against the clamping head (11) by means of the driver (14).

5. Apparatus according to claim 4, **characterised in that** the driver (14) is embodied as a sleeve with a groove-shaped notch (15).

6. Apparatus according to one of claims 1, 4 and 5, **characterised in that** the clamping head (11) has an insertion funnel (16) for centring the fuel lance (2).

7. Apparatus according to one of claims 1 to 6, **characterised in that** the actuator (6) is embodied as a pneumatic actuator, preferably as a pneumatic muscle.

8. Apparatus according to one of claims 1 to 7, **characterised in that** the coupling device (4) is connected to an equipment frame (18) by way of a support flange (17), wherein the equipment frame is supported on the coupling device (4) by way of the support flange (17).

9. Apparatus according to claim 8, **characterised in that** the equipment frame (18) is enclosed at least partially by a protective housing (19).

10. Apparatus according to claim 8, **characterised in that** the support flange (17) comprises a measuring device for measuring the pressing force of the fuel lance (2) onto a metallurgical vessel.

11. Apparatus according to claim 10, **characterised in that** the fuel lance holder (1) has a measurement amplifier for amplifying a signal of the measuring device.

12. Apparatus according to one of claims 1 to 11, **characterised in that** the fuel lance holder (1) has a longitudinally oriented reinforcing element (20), so that the deflection of the fuel lance (2) is reduced when pressing onto a metallurgical vessel.

## Revendications

1. Support de lance de combustion (1) pour le soutien d'une lance de combustion (2) par le biais d'un système de manipulation (3), **caractérisé en ce que** le support de lance de combustion (1) présente
- un système de couplage (4) pour le couplage automatique du support de lance de combustion (1) au système de manipulation (3), le système de couplage (4) étant configuré en tant que cône de serrage (8) avec un système de verrouillage (9),
- un système de serrage (5) avec un actionneur (6) pour la liaison automatique du support de lance de combustion (1) à la lance de combustion (2), le système de serrage (5) étant configuré de manière à pouvoir être déplacé par l'actionneur (6) dans une position de serrage pour serrer la lance de combustion (2) et dans une position de relâchement pour relâcher la lance de combustion (2) et le système de serrage (5) présentant une tête à serrage (11) avec un axe de rotation (12) et au moins un levier coudé (13), le levier coudé (13) étant configuré de manière à pouvoir pivoter via l'axe de rotation (12) ; et
- au moins une conduite d'introduction d'oxygène (7) pour l'introduction d'oxygène dans la lance de combustion (2).

2. Dispositif selon la revendication 1, **caractérisé en ce que** le système de couplage (4) comprend plusieurs passages, par exemple pour les fluides, air comprimé ou hydraulique, et pour au moins une ligne électrique.

3. Dispositif selon la revendication 2, **caractérisé en ce qu'**au moins deux passages présentent le même écartement par rapport à l'axe de symétrie (10) du système de couplage (4).

4. Dispositif selon la revendication 1, **caractérisé en ce que** deux leviers coudés (13) sont reliés ensemble au moyen d'un élément d'entraînement (14), la lance de combustion (2) pouvant être serrée au moyen de l'élément d'entraînement (14) contre la tête à serrage (11).

5. Dispositif selon la revendication 5, **caractérisé en ce que** l'élément d'entraînement (14) est configuré en tant que douille avec une entaille en forme de rainure (15).

6. Dispositif selon l'une des revendications 1, 4 et 5, **caractérisé en ce que** la tête à serrage (11) présente un guide d'insertion (16) pour le centrage de la lance de combustion (2).

7. Dispositif selon l'une des revendications 1 à 6, **caractérisé en ce que** l'actionneur (6) est configuré en tant qu'actionneur pneumatique, de préférence en tant que muscle pneumatique.

8. Dispositif selon l'une des revendications 1 à 7, **caractérisé en ce que** le système de couplage (4) est relié à un châssis (18) via une bride de support (17), le châssis étant supporté sur le système de couplage via la bride de support (18).

9. Dispositif selon la revendication 8, **caractérisé en ce que** le châssis (18) est entouré au moins partiellement par un logement de protection (19).

10. Dispositif selon la revendication 8, **caractérisé en ce que** la bride de support (17) comprend un système de mesure pour la mesure de la force de pression de la lance de combustion (2) contre un récipient métallurgique.

11. Dispositif selon la revendication 10, **caractérisé en ce que** le support de lance de combustion (1) présente un amplificateur de mesure pour l'amplification d'un signal du système de mesure.

12. Dispositif selon l'une des revendications 1 à 11, **caractérisé en ce que** le support de lance de combustion (1) présente un élément de raidissement (20) orienté dans la direction longitudinale, de sorte que le fléchissement de la lance de combustion (2) lors d'une pression contre un récipient métallurgique est réduit.
